# EUROPÄISCHE PATENTSCHRIFT

(11) **EP 1 591 037 B1**
(45) Veröffentlichungstag und Bekanntmachung des Hinweises auf die Patenterteilung: **31.08.2011**
(21) Anmeldenummer: 05006570.5
(22) Anmeldetag: 24.03.2005
(51) Int. Cl.: A46B 13/02, A46B 3/20, A46B 13/00, A46D 1/00

(54) **Bürstenaggregat**
Brush unit
Unité de brosses

(30) Priorität: 29.04.2004 DE 102004021188
(43) Veröffentlichungstag der Anmeldung: 02.11.2005
(73) Patentinhaber: MONTI-WERKZEUGE GMBH, 53227 Bonn (DE)
(72) Erfinder: Montabaur, Werner, 53639 Königswinter (DE)
(74) Vertreter: Nunnenkamp, Jörg

(56) Entgegenhaltungen:
- DE-A1- 3 718 932
- GB-A- 555 428
- JP-A- 2001 334 453
- US-A- 2 279 608
- US-A- 3 550 320
- US-A- 5 524 315

## Beschreibung

Die Erfindung betrifft ein Bürstenaggregat mit einem rotativ antreibbaren Bürstenhalter und einer Ringbürste mit einem Bürstenband und von dem Bürstenband nach außen abstehenden Borsten.

Ein Bürstenaggregat des eingangs beschriebenen Aufbaus ist beispielsweise durch die US 5 524 315 bekannt geworden. Vergleichbare Ausgestaltungen sind Gegenstand der US 2 279 698 A und der JP 2001/334453.

Im erstgenannten Fall geht es um einen Bürstenapparat, mit dessen Hilfe beide Seiten eines kontinuierlichen Metallstreifens im Sinne einer Finishbehandlung bearbeitet werden können. Dazu ist unter anderem ein Honstein verstellbar gegenüber der zugehörigen Bürste gelagert. Die Verstellung erfolgt überwiegend radial und wird mit Hilfe eines Handrades vorgenommen.

Im Rahmen der JP 2001/334453 wird das Polieren einer Oberfläche mit Hilfe einer Bürste angesprochen. Die Bürste lässt sich mittels eines Schleifkörper auf gleiche Borstenlängen einstellen. Bürste und Schleifkörper verfügen über die gleiche Umlaufrichtung, so dass im Kontaktbereich zwischen der Bürste und dem Schleifkörper beide Elemente gegenläufig aneinander vorbeibewegt werden. Dadurch wird der gewünschte Effekt erreicht, nämlich die Bürste hinsichtlich der Länge der einzelnen Borsten zu bearbeiten.

Derartige Bürstenaggregate dienen zur Oberflächenbehandlung verschiedener Werkstoffe, um eine vorgegebene Rautiefe zu erzeugen. Diese Werkstoffe können beispielsweise eine korrodierte Oberfläche, lackbeschichtete Oberfläche oder andere Oberflächenbeschichtungen aufweisen, die im Zuge der Oberflächenbearbeitung mittels der rotierenden Ringbürste entfernt werden. Bei der Bearbeitung härterer Werkstoffe sind die Borsten der Ringbürste einem erheblichen Verschleiß unterworfen. Dieser Verschleiß führt zu einer Abstumpfung der Borstenspitzen. Das hat zur Folge, dass die Oberflächenbehandlung auf der Werkstoffoberfläche proportional dem Verschleiß der Borstenspitzen schlechter wird, so dass schließlich die gewünschte Rautiefe nicht eingehalten werden kann. - Hier setzt die Erfindung ein.

Der Erfindung liegt die Aufgabe zugrunde, ein Bürstenaggregat der eingangs beschriebenen Ausführungsform zu schaffen, welches die gewünschten Effekte auf der jeweils zu behandelnden Werkstoffoberfläche sicherstellt, insbesondere die Einhaltung der zu erzeugenden Rautiefe zumindest für eine längere Zeit in gleichbleibender Qualität gewährleistet.

Diese Aufgabe löst die Erfindung bei einem gattungsgemäßen Bürstenaggregat dadurch, dass gegen die Ringbürste ein die Borsten auf ihrer in Arbeitsrichtung gesehenen Rückseite hinterschleifender Schleifkörper anstellbar ist oder umgekehrt, um einen vorgegebenen Schleifgrat zur Borstenspitze hin zu erzeugen. Umgekehrt meint im Rahmen der Erfindung, dass auch die Ringbürste gegen einen solchen Schleifkörper angestellt werden kann, zumal es sich bei dem Bürstenaggregat um eine Handmaschine oder eine statische Bearbeitungsmaschine handeln kann. Die Erfindung geht von der Erkenntnis aus, dass sich die dem Verschleiß unterworfenen Borsten der Ringbürste und insbesondere die abgestumpften Borstenspitzen unschwer im Wege eines Hinterschleifens nachschleifen lassen, so dass die auf der zu bearbeitenden Werkstoffoberfläche zu erzeugenden Effekte und insbesondere die gewünschte Rautiefe stets eingehalten werden können. Der Schleifkörper kann als ortsfester Schleifkörper oder als rotativ gelagerter Schleifkörper ausgebildet sein. In beiden Fällen sieht die Erfindung vor, dass der rotativ angetriebene Bürstenhalter des Bürstenaggregates mit einem Vorlauf und einem Rücklauf für die Ringbürste ausgerüstet ist, wobei der Vorlauf der Oberflächenbearbeitung dient, der Rücklauf dagegen dem Hinterschleifen der Borsten bzw. Borstenspitzen.

Weitere erfindungswesentliche Merkmale sind im Folgenden aufgeführt. So ist vorzugsweise der Schleifkörper am Bürstenaggregat selbst drehfest befestigt oder rotativ gelagert, bildet also eine Baueinheit mit dem Bürstenaggregat. Dabei kann der Schleifkörper mittels eines an das Bürstenaggregat angeschlossenen Anstellhebels gegen die Borsten der Ringbürste, und zwar gegen die Borstenrückseite um ein vorgegebenes Maß anstellbar sein. In verschiedenen Fällen kann schon das Eigengewicht des Schleifkörpers ausreichen, um ein Hinterschleifen der Borsten zu erreichen. - Nach einem Vorschlag der Erfindung, dem selbständige Bedeutung zukommt, ist vorgesehen, dass der Schleifkörper permanent gegen die Borsten der Ringbürste mit einem vorgegebenen Anpressdruck angedrückt ist, also auch während des Arbeitseinsatzes des Bürstenaggregates bzw. der rotativ angetriebenen Ringbürste, so dass folglich ein permanentes Hinterschleifen der Borsten bzw. Borstenspitzen erfolgt. Dadurch wird erreicht, dass die auf der zu bearbeitenden Werkstoffoberfläche angestrebten Effekte und insbesondere die Rautiefe gleichbleibend und ununterbrochen eingehalten werden können. In diesem Zusammenhang kann der Anstellhebel als federbelasteter Hebel ausgebildet sein, um einen vorgegebenen Anpressdruck des Schleifkörpers gegen die Borsten der Ringbürste zu erreichen. Der Anstellhebel kann ferner an einer an dem Bürstenaggregat befestigten Lagerwange um einen Schwenkpunkt gegen die Borsten der Ringbürste verschwenkbar gelagert sein, um den Schleifkörper mehr oder weniger in Einsatz bringen zu können. Dafür weist der Anstellhebel vorzugsweise eine als Handgriff ausgebildete Hebelverlängerung über den Schwenkpunkt hinaus auf oder ist mittels eines besonderen Betätigungshebels verschwenkbar.

Nach einem weiteren Vorschlag der Erfindung, dem besondere Bedeutung zukommt, ist vorgesehen, dass der rotativ gelagerte Schleifkörper von dem Hauptmotor des Bürstenaggregates gegebenenfalls unter Zwischenschaltung eines Getriebes oder von einem eigenen Antriebsmotor, z. B. Elektro- oder Pneumatikmotor mit einer vorgegebenen Voreilung zur Umlaufgeschwindigkeit und folglich Schleifgeschwindigkeit der Ringbürste bzw. ihrer Borsten in gegenläufiger Umlaufrichtung zu der Ringbürste antreibbar ist. Dadurch wird eine mit der Umlaufrichtung der Ringbürste gleichsinnige Schleifrichtung erreicht, wobei die Drehzahl des Schleifkörpers die Drehzahl und folglich Schleifgeschwindigkeit der Ringbürste um ein vorgegebenes Maß übersteigt, um eben eine Voreilung zu erreichen, aus welcher das Hinterschleifen der Borsten im Bereich der Borstenenden und -spitzen resultiert. Grundsätzlich kann im Rahmen der Erfindung auch noch eine Kupplung zwischen dem Hauptmotor und dem Schleifkörper bzw. dem Elektro- und Pneumatikmotor und dem Schleifkörper vorgesehen sein. Die Motoren können mittels Netzstrom oder Batterien angetrieben werden. Der Schleifkörper ist vorzugsweise als Schleifstein oder Schleifpapierrolle ausgeführt, wenngleich auch andere Ausführungsformen zur Verwirklichung eines gleichsam Rundschleifkörpers denkbar sind. Die Borsten der Ringbürste weisen ein in Umlaufrichtung und folglich Arbeitsrichtung ausgerichtetes, z. B. abgewinkeltes Borstenende auf. Die Borsten können als Drahtborsten oder Kunststoffborsten ausgebildet sein. Um unterschiedlich harte Werkstoffe bearbeiten zu können, müssen unterschiedliche Ringbürsten eingesetzt werden. Diese unterscheiden sich hinsichtlich der Borsten in beispielsweise der Stahldrahtqualität, der Drahtstärke, Zahnlänge, Besatzdichte, Zahnform, gehärtet oder ungehärtet oder geschliffen. Wenn beispielsweise eine härtere Werkstoffqualität bearbeitet werden soll, wird eine Ringbürste mit gehärteten und geschliffenen Borsten eingesetzt.

Im Folgenden wird die Erfindung anhand einer lediglich ein Ausführungsbeispiel darstellenden Zeichnung näher erläutert. Es zeigen:

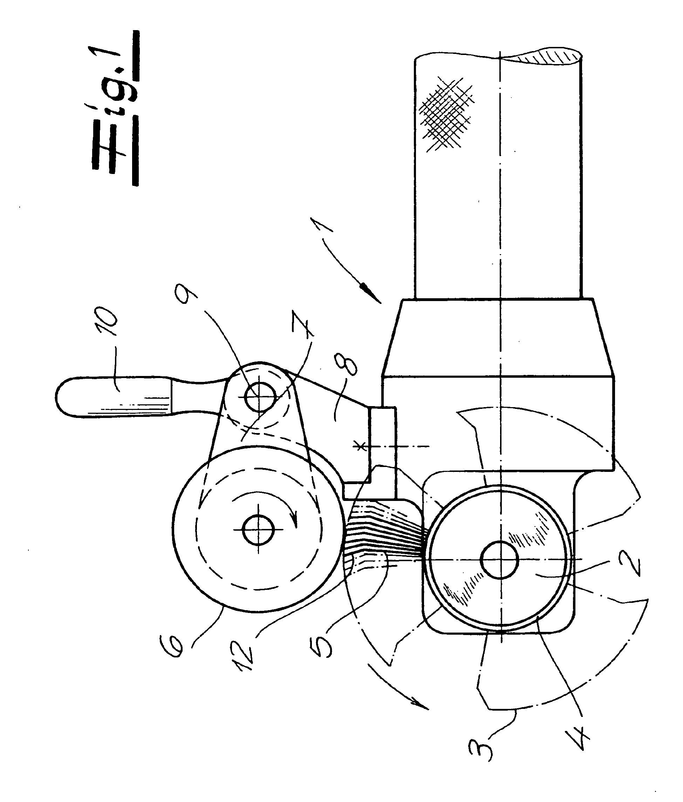

- **Fig. 1**: ein Bürstenaggregat teilweise in schematischer Seitenansicht,

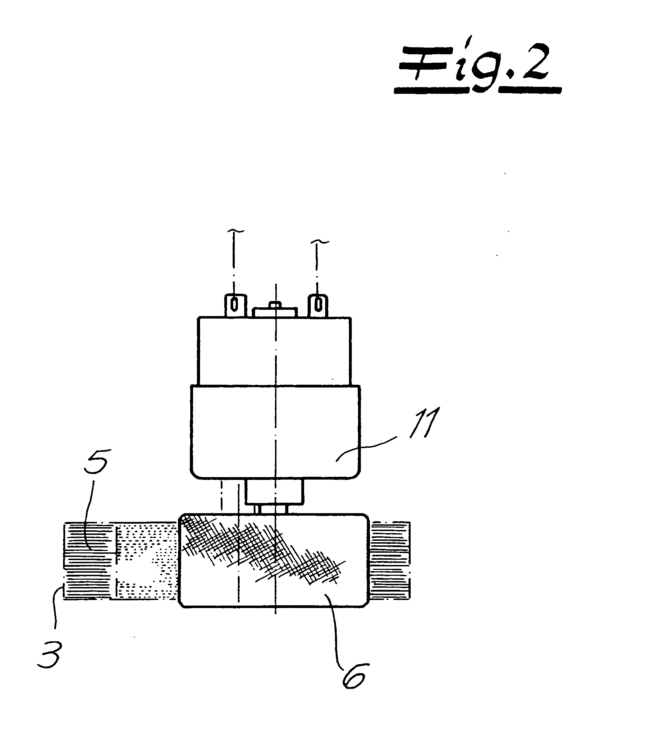

- **Fig. 2**: ausschnittsweise eine Draufsicht auf den Gegenstand nach Fig.1 mit eigenem Antriebsmotor für einen Rundschleifstein und

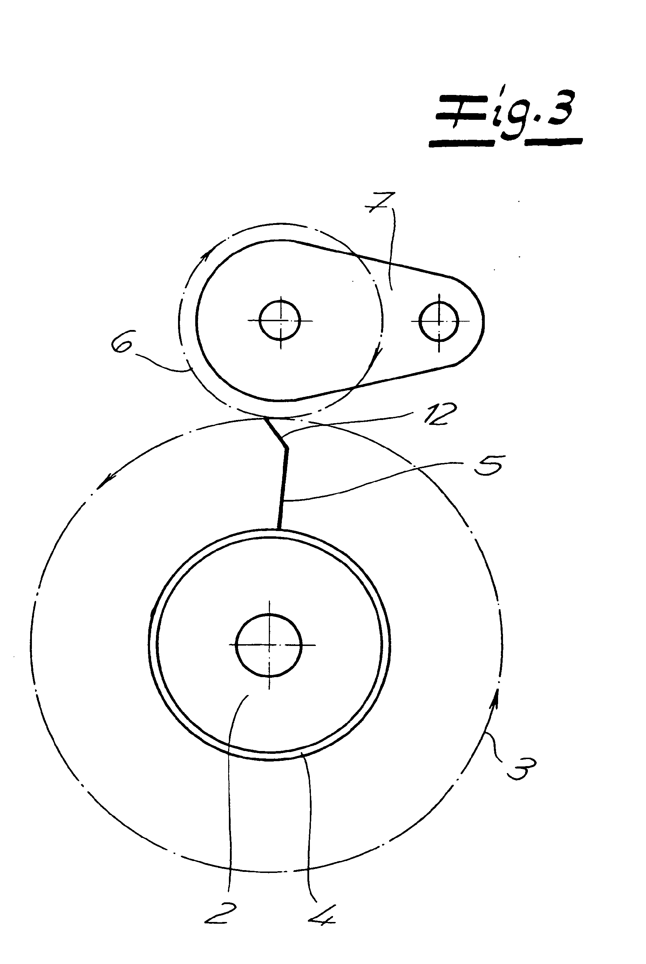

- **Fig. 3**: ausschnittsweise den Gegenstand nach Fig. 1 mit durch Pfeile angedeuteten Umlaufrichtungen für die Ringbürste und den Rund- schleifstein.

In den Figuren ist ein Bürstenaggregat 1 mit einem rotativ antreibbaren Bürstenhalter 2 und einer von dem Bürstenhalter 2 gehaltenen Ringbürste 3 mit einem biegsamen Bürstenband 4 und von dem Bürstenband 4 nach außen abstehenden Borsten 5 dargestellt. Gegen die Ringbürste 3 ist ein die Borsten 5 auf ihrer in Arbeitsrichtung gesehenen Rückseite hinterschleifender Schleifkörper 6 anstellbar, um einen vorgegebenen Schleifgrat zur Bürstenspitze hin zu erzeugen.
Der Schleifkörper 6 ist rotativ gelagert und mittels eines an das Bürstenaggregat 1 angeschlossenen Anstellhebels 7 gegen die Borsten 5 der Ringbürste 3 anstellbar. Nach dem Ausführungsbeispiel ist der Schleifkörper 6 permanent gegen die Borsten 5 der Ringbürste 3 mit einer vorgegebenen Anpresskraft andrückbar, also auch während des Arbeitseinsatzes der Ringbürste bzw. des Bürstenaggregates. Der Anstellhebel 7 ist an einer an dem Bürstenaggregat 1 befestigten Lagerwange 8 um einen Schwenkpunkt 9 gegen die Ringbürste 3 bzw. deren Borsten 5 verschwenkbar, und zwar mittels eines dafür geeigneten Betätigungshebels 10. Der rotativ gelagerte Schleifkörper 6 ist nach dem Ausführungsbeispiel von einem eigenen Antriebsmotor 11, z. B. Elektro- oder Pneumatikmotor mit einer vorgegebenen Voreilung zur Umlaufgeschwindigkeit und folglich Schleifgeschwindigkeit der Ringbürste 3 bzw. ihrer Borsten 5 in gegenläufiger Umlaufrichtung zu der Ringbürste 3 antreibbar, so dass unter Erzeugung einer gleichsinnigen Schleifrichtung ein Hinterschleifen der Borsten 5 bzw. ihrer Borstenenden gewährleistet ist. Nach dem Ausführungsbeispiel ist der Schleifkörper 6 als Schleifstein bzw. Rundschleifstein ausgebildet. Die Borsten 5 weisen ein in Umlaufrichtung und folglich Arbeitsrichtung der Ringbürste abgewinkeltes Borstenende 12 auf und sind als Drahtborsten aus Stahldraht ausgebildet und z. B. als U-förmige Borsten in dem Bürstenband 4 verankert.

## Patentansprüche

1. Bürstenaggregat (1) mit einem rotativ antreibbaren Bürstenhalter (2) und
einer Ringbürste (3) mit einem Bürstenband (4) und von dem Bürstenband (4) nach außen abstehenden Borsten (5), **dadurch gekennzeichnet,**
**dass** gegen die Ringbürste (3) ein die Borsten (5) auf ihrer in Arbeitsrichtung gesehenen Rückseite hinterschleifender Schleifkörper (6) anstellbar ist oder umgekehrt.

2. Bürstenaggregat (1) nach Anspruch 1, **dadurch gekennzeichnet, dass** der Schleifkörper (6) als ortsfester Schleifkörper ausgebildet ist.

3. Bürstenaggregat (1) nach Anspruch 1, **dadurch gekennzeichnet, dass** der Schleifkörper (6) als rotativ gelagerter Schleifkörper ausgebildet ist.

4. Bürstenaggregat (1) nach einem der Ansprüche 1 bis 3, **dadurch gekennzeichnet, dass** der rotativ angetriebene Bürstenhalter (2) mit einem Vorlauf und einem Rücklauf für die Ringbürste (3) betreibbar ist.

5. Bürstenaggregat (1) nach einem der Ansprüche 1 bis 4, **dadurch gekennzeichnet, dass** der Schleifkörper (6) am Bürstenaggregat (1) drehfest befestigt oder rotativ gelagert ist.

6. Bürstenaggregat (1) nach einem der Ansprüche 1 bis 5, **dadurch gekennzeichnet, dass** der Schleifkörper (6) mittels eines an das Bürstenaggregat (1) angeschlossenen Anstellhebels (7) gegen die Borsten (5) der Ringbürste (3) anstellbar ist.

7. Bürstenaggregat (1) nach einem der Ansprüche 1 bis 6, **dadurch gekennzeichnet, dass** der Schleifkörper (6) permanent gegen die Borsten (5) der Ringbürste (3) mit einer vorgegebenen Anpresskraft angedrückt ist.

8. Bürstenaggregat (1) nach einem der Ansprüche 6 bis 7, **dadurch gekennzeichnet, dass** der Anstellhebel (7) als federbelasteter Hebel ausgebildet ist.

9. Bürstenaggregat (1) nach einem der Ansprüche 6 bis 8, **dadurch gekennzeichnet, dass** der Anstellhebel (7) an einer an dem Bürstenaggregat (1) befestigten Lagerwange (8) um einen Schwenkpunkt (9) gegen die Borsten (5) der Ringbürste (3) verschwenkbar gelagert ist.

10. Bürstenaggregat (1) nach einem der Ansprüche 6 bis 9, **dadurch gekennzeichnet, dass** der Anstellhebel (7) eine als Handgriff ausgebildete Hebelverlängerung über den Schwenkpunkt hinaus aufweist oder mittels eines Betätigungshebels (10) verschwenkbar ist.

11. Bürstenaggregat (1) nach einem der Ansprüche 3 bis 10, **dadurch gekennzeichnet, dass** der rotativ gelagerte Schleifkörper (6) von dem Hauptmotor des Bürstenaggregates (1) gegebenenfalls unter Zwischenschaltung eines Getriebes oder von einem eigenen Antriebsmotor (11), z. B. Elektro- oder Pneumatikmotor, mit einer vorgegebenen Voreilung zur Umlaufgeschwindigkeit der Ringbürste (3) in gegenläufiger Umlaufrichtung zu der Ringbürste (3) antreibbar ist.

12. Bürstenaggregat (1) nach einem der Ansprüche 3 bis 11, **dadurch gekennzeichnet, dass** der Schleifkörper (6) als Schleifstein, Schleifpapierrolle oder dergleichen ausgeführt ist.

13. Bürstenaggregat (1) nach einem der Ansprüche 1 bis 12, **dadurch gekennzeichnet, dass** die Borsten (5) der Ringbürste (3) ein in Umlaufrichtung ausgerichtetes, z. B. abgewinkeltes Borstenende (12) aufweisen.

14. Bürstenaggregat (1) nach einem der Ansprüche 1 bis 13, **dadurch gekennzeichnet, dass** die Borsten (5) als Drahtborsten oder Kunststoffborsten ausgebildet sind.

## Claims

1. A brush unit (1) with a rotatably drivable brush holder (2) and a ring brush (3) with a brush band (4) and bristles (5) projecting outwardly from the brush band (4), **characterized in that** a grinding body (6) reliefgrinding the bristles (5) on their rear side, as viewed in the working direction, can be positioned against the ring brush (3) or vice versa.

2. The brush unit (1) according to claim 1, **characterized in that** the grinding body (6) is configured as stationary grinding body.

3. The brush unit (1) according to claim 1, **characterized in that** the grinding body (6) is configured as rotatably mounted grinding body.

4. The brush unit (1) according to any one of the claims 1 to 3, **characterized in that** the rotatably driven brush holder (2) can be operated with a forward motion and a reverse motion for the ring brush (3).

5. The brush unit (1) according to any one of the claims 1 to 4, **characterized in that** the grinding body (6) is non-rotatably fixed on the brush unit (1) or is rotatably mounted.

6. The brush unit (1) according to any one of the claims 1 to 5, **characterized in that** the grinding body (6) can be positioned against the bristles (5) of the ring brush (3) by means of a positioning lever (7) connected to the brush unit (1).

7. The brush unit (1) according to any one of the claims 1 to 6, **characterized in that** the grinding body (6) is permanently pressed against the bristles (5) of the ring brush (3) with a predetermined contact pressure force.

8. The brush unit (1) according to any one of the claims 6 to 7, **characterized in that** the positioning lever (7) is configured as springloaded lever.

9. The brush unit (1) according to any one of the claims 6 to 8, **characterized in that** the positioning lever (7) is pivotably mounted on a bearing cheek (8) fastened on the brush unit (1) and is pivotable about a pivot point (9) against the bristles (5) of the ring brush (3).

10. The brush unit (1) according to any one of the claims 6 to 9, **characterized in that** the positioning lever (7) has a lever extension configured as handle and extending beyond the pivot point, or is pivotable by means of an actuating lever (10).

11. The brush unit (1) according to any one of the claims 3 to 10, **characterized in that** the rotatably mounted grinding body (6) can be driven by the main motor of the brush unit (1), if necessary with interposition of a gear unit or a separate drive motor (11), e.g. electric or pneumatic motor, with a predetermined lead to the circumferential speed of the ring brush (3) in the opposite rotational direction.

12. The brush unit (1) according to any one of the claims 3 to 11, **characterized in that** the grinding body (6) is configured as grinding stone, sanding paper roll or the like.

13. The brush unit (1) according to any one of the claims 1 to 12, **characterized in that** the bristles (5) of the ring brush (3) have a bristle end (12) which is aligned, e.g. angled, in the rotational direction.

14. The brush unit (1) according to any one of the claims 1 to 13, **characterized in that** the bristles (5) are configured as wire bristles or plastic bristles.

## Revendications

1. Groupe de brossage (1) comprenant un support de brosse (2) pouvant être entraîné en rotation et une brosse annulaire (3) comprenant une bande de brossage (4) et des soies (5) faisant saillie vers l'extérieur de la bande de brossage (4), **caractérisé en ce qu'**un corps abrasif (6) peut être placé contre la brosse annulaire (3), effectuant une dépouille des soies (5) vu dans le sens de travail, ou inversement.

2. Groupe de brossage (1) selon la revendication 1, **caractérisé en ce que** le corps abrasif (6) est formé comme un corps abrasif fixe.

3. Groupe de brossage (1) selon la revendication 1, **caractérisé en ce que** le corps abrasif (6) est formé comme un corps abrasif disposé de manière rotative.

4. Groupe de brossage (1) selon l'une des revendications 1 à 3, **caractérisé en ce que** le support de brosse (2) pouvant être entraîné en rotation peut être utilisé avec une marche avant et une marche arrière pour la brosse annulaire (3).

5. Groupe de brossage (1) selon l'une des revendications 1 à 4, **caractérisé en ce que** le corps abrasif (6) est placé de manière fixe ou rotative sur le groupe de brossage (1).

6. Groupe de brossage (1) selon l'une des revendications 1 à 5, **caractérisé en ce que** le corps abrasif (6) peut être placé contre les soies (5) de la brosse annulaire (3) au moyen d'un levier de réglage (7) raccordé au groupe de brossage (1).

7. Groupe de brossage (1) selon l'une des revendications 1 à 6, **caractérisé en ce que** le corps abrasif (6) est appuyé en permanence contre les soies (5) de la brosse annulaire (3) avec une force d'appui prédéfinie.

8. Groupe de brossage (1) selon l'une des revendications 6 à 7, **caractérisé en ce que** le levier de réglage (7) est formé comme un levier contraint par ressort.

9. Groupe de brossage (1) selon l'une des revendications 6 à 8, **caractérisé en ce que** le levier de réglage (7) est placé de manière à pouvoir pivoter sur un point de pivotage (9) contre les soies (5) de la brosse annulaire (3), sur une face d'appui (8) fixée sur le groupe de brossage (1).

10. Groupe de brossage (1) selon l'une des revendications 6 à 9, **caractérisé en ce que** le levier de réglage (7) présente un prolongement de levier formé comme une poignée au-delà du point de pivotage ou est pivotable au moyen d'un levier d'actionnement (10).

11. Groupe de brossage (1) selon l'une des revendications 3 à 10, **caractérisé en ce que** le corps abrasif (6) placé de manière rotative peut être entraîné par le moteur principal du groupe de brossage (1), le cas échéant par l'interposition d'un engrenage ou par un propre moteur d'entraînement (11), par exemple un moteur électrique ou pneumatique, avec une avance prédéfinie par rapport à la vitesse de rotation de la brosse annulaire (3) dans le sens périphérique contraire à la brosse annulaire (3).

12. Groupe de brossage (1) selon l'une des revendications 3 à 11, **caractérisé en ce que** le corps abrasif (6) est conçu comme une pierre d'affûtage, un rouleau de papier abrasif ou similaire.

13. Groupe de brossage (1) selon l'une des revendications 1 à 12, **caractérisé en ce que** les soies (5) de la brosse annulaire (3) présentent une extrémité de soie (12) dirigée dans le sens périphérique, par exemple pliée.

14. Groupe de brossage (1) selon l'une des revendications 1 à 13, **caractérisé en ce que** les soies (5) sont formées comme des soies métalliques ou plastiques.
